# EUROPEAN PATENT APPLICATION

(11) **EP 1 669 923 A2**
(43) Date of publication of application: **14.06.2006**
(21) Application number: 05022442.7
(22) Date of filing: 14.10.2005
(51) Int. Cl.: G06T 1/00

(54) **System and method for processing raw image files**

(30) Priority: 10.12.2004 US 8174
(71) Applicant: Microsoft Corporation, Redmond WA 98052 (US)
(72) Inventor: Albert, David, Redmond, WA 98052 (US); Turner, Richard S., Redmond, WA 98052 (US); Kasperkiewicz, Tomasz S. M., Redmond, WA 98052 (US)
(74) Representative: Goddar, Heinz J.

(57) **Abstract**

A system and related techniques provide a uniform abstraction layer for accessing and manipulating Raw image files, with the necessity for proprietary application tools. According to embodiments in one regard, an operating system or other platform may expose a set of application programming interfaces (APIs) to general purpose image processing, photo album, printing or other applications through which a Raw API layer may be accessed. That layer may in turn communicate via a set of Raw codecs or other protocols or channels with a hardware-specific Raw plugin layer, which may host a set of Raw format specifications supplied, for instance, by digital still camera manufacturers or other vendors. Those hardware-specific, low-level specifications may specify or encapsulate, for example, the Raw container or file format, Raw file metadata, thumbnail representations or other details for individual Raw formats. Because the necessary Raw translation is abstracted to the operating system or other platform, diverse applications may seamlessly use Raw image files from a variety of camera and other manufacturers, without a need for proprietary tools. Users may therefore gain access to the highest possible resolution representation of image data captured by a given imaging device, transparently and without a need to switch tools between different manufacturers' cameras or devices.

## Description

### CROSS-REFERENCE TO RELATED APPLICATION

Not applicable.

### STATEMENT REGARDING FEDERALLY SPONSORED RESEARCH OR DEVELOPMENT

Not applicable.

### FIELD OF THE INVENTION

The invention relates to the field of image processing, and more particularly to systems and methods for accessing and manipulating raw image files, such as raw digital still camera data, from within an extensible, plug-in architecture.

### BACKGROUND OF THE INVENTION

The proliferation of comparatively high-resolution digital imaging devices, such as digital still cameras, has led to the pursuit of increasingly higher-resolution photo manipulation, printing and other output and other tools. In general, digital cameras capture images using charged couple devices (CCDs), or other sensors in so-called Raw format, which represents the data gathered at the lowest hardware level the device is capable of generating. Since most or all image processing tools and other applications and utilities require image data to be formatted in higher-order format, such as for instance 24-bit RGB (Red Green Blue) data, most or all digital cameras include digital signal processors or other intelligence to convert raw sensor data into more readily processed or outputted files, such as JPEG (Joint Photographic Experts Group) or other formatted files.

However, the expanding digital image market has brought a recognition that the Raw image files generated by digital cameras and other devices represent an opportunity to extract the highest possible level of detail from the device. Certain digital camera manufacturers have developed proprietary software, for example, which works with their respective cameras and other products to extract the Raw image files from the device, so that for example thumbnail representations of the Raw image files can be generated, or other processing on that high-resolution data may take place. Nevertheless, difficulties in Raw image processing remain. For one, almost every device manufacturer employs a different Raw file specification, so that software and tools designed for one set of manufacturer's products are, as a matter of course, practically incompatible with those of other vendors.

For another, due to the diverse, and typically proprietary nature of the Raw image formats used by various manufacturers, an operating system or application can not in general supply the same services and functions to a user as with other more standardized encoded image formats. For example the operating system or application will typically be unable to permit a user to browse, view or manipulate Raw image files, for example, in a directory, since those files and their metadata may be opaque to the platform. An operating system or application vendor might attempt to reverse-engineer or "crack" the Raw format of various manufacturers, but the number of possible formats, the need to track updates to those formats and other obstacles prevent that from being a practical possibility. Other problems in Raw image management exist.

### SUMMARY OF THE INVENTION

The invention overcoming these and other problems in the art relates in one regard to a system and method for processing Raw image files, in which the accessing and manipulation of Raw image files is abstracted in one regard to an application programming interface (API) layer in an operating system or other platform. According to embodiments of the invention in one regard, a device or hardware-specific raw plugin layer may be employed in the operating system or other supporting platform, into which independent hardware vendors or other suppliers may register Raw file or container specifications, image conversion protocols and other functionality or routines compatible with that vendor's specific Raw format and content. According to embodiments of the invention in one regard, general-purpose applications such as image processing, photo album, printing or other programs or applications may thus call on Raw interfaces exposed by the extended set of APIs, and access and extract Raw image files without having to invoke any special-purpose or dedicated application software tied solely to a given device manufacturer. Applications may thus access, extract, view, manipulate and exchange image files reflecting the full measure of resolution and detail generated by a camera or other imaging device, in a consistent and uniform fashion, transparently to the user.

### BRIEF DESCRIPTION OF THE DRAWINGS

Fig. 1 illustrates an environment in which a system and method for processing raw image files may operate, according to embodiments of the invention.

Fig. 2 illustrates image capture from an imaging sensor to a corresponding Raw file, according to embodiments of the invention.

Fig. 3 illustrates an application programming interface and corresponding resources for processing Raw image files, according to embodiments of the invention.

Fig. 4 illustrates a flowchart of overall Raw image processing, according to embodiments of the invention.

### DETAILED DESCRIPTION OF EMBODIMENTS

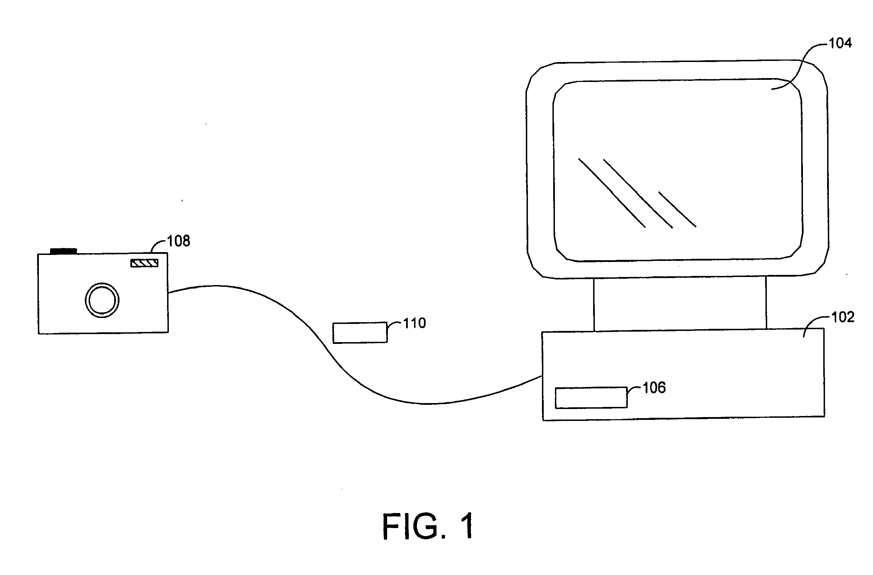

Fig. 1 illustrates an overall environment in which a system and method for processing raw image files may operate, according to embodiments of the invention. As illustrated in that figure, an imaging device 108 such as a digital still camera, digital video camera, scanner, a camera-equipped cellular telephone or personal digital assistant (PDA), or other input device or hardware may capture images in electronic form. According to embodiments of the invention in one regard, the imaging device 108 may generate a Raw image file 110 or Raw image data reflecting the captured image at the lowest level of hardware activity, generally representing the unaltered data generated by or impressed on the embedded sensors of the imaging device 108, itself. In the case of a digital camera, the sensors of the imaging device 108 may be or include electro-optical sensors, such as charged-coupled devices (CCDs).

In general and as illustrated, the imaging device 108 may generate the Raw image file 110 and communicate that file to a client 102, such as a personal computer, for extraction, manipulation and processing. The client 102 may present a user interface 104, such as a graphical user interface, a text or command line interface, an interface including audio input or output, or other interfaces. In embodiments, the imaging device 108 may communicate the Raw image file 110 to the client 102, for instance to store that file or encoded files converted from that file to storage 106, which may be or include hard disk storage, optical storage or other storage or media.

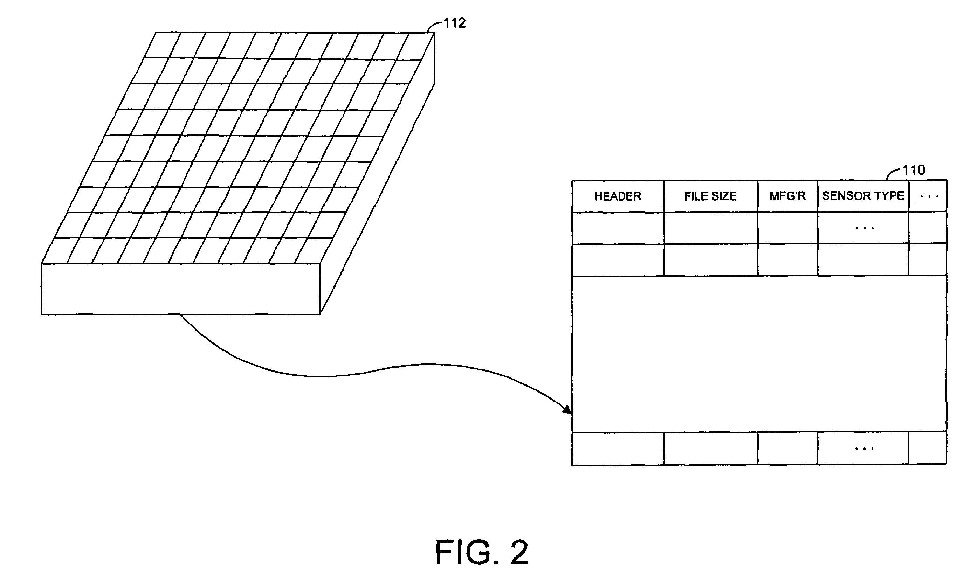

As illustrated in more detail for example in Fig. 2, in embodiments the imaging device 108 may contain a sensor 112, such as a CCD array which may, for example, be optically filtered by colored lenses. Sensor 112 may likewise be or include other optical or electronic sensing components, such as complementary metal oxide semiconductor (CMOS) detector arrays, or Foveon™-type sensor arrays. Other sensors or technology may be used. In embodiments, in general the sensor 112 of imaging device 108 may generate Raw image file 110 or other data by reading out the sensor voltage or other levels from the CCD, CMOS sensor or other image capture device, which readings may for instance be digitized into 8-bit, 12-bit, 16-bit or other values for each pixel or color component of a pixel. Depending on implementation, the digitized pixel or color component values may further be stored to 24-bit, 48-bit or other RGB or other files. The Raw image file 110 may likewise in embodiments contain a header structure having fields for instance indicating file size, manufacturer ID, sensor type, or other data or metadata. In embodiments, the imaging device 108 may contain a menu or other option to capture and store images in Raw or other formats, depending on the user's preference for a given shoot or series of images.

Raw image file 110 or constituent data may in one regard thus represent the highest possible resolution data that imaging device 108 is capable of generating, preserving the least-processed data representing the image impressed upon the sensor 112 for a given image or exposure. However, in general, application software such as image editing, photo album or photo retouching, file browser or other image-related or other products may not be capable of accessing, opening, reading, displaying or manipulating the Raw image file 110 due to the proprietary format of that schema, particularly since the manufacturer of each imaging device 108 may specify different file characteristics for their respective imaging platforms.

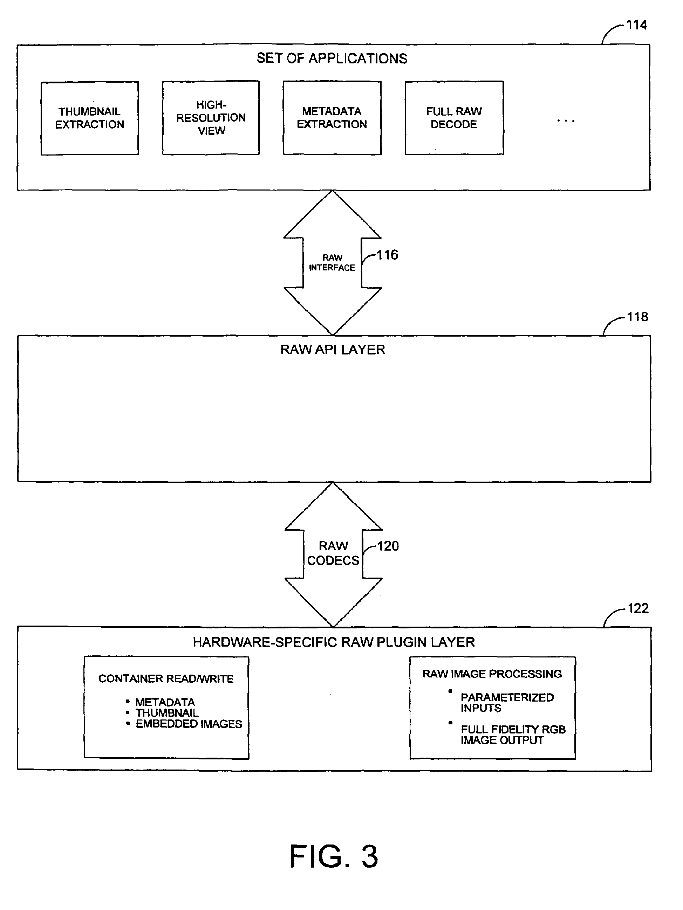

According to embodiments of the invention in a further regard, therefore, and as for instance illustrated in Fig. 3, a Raw image processing platform may be implemented which, generally speaking, provides an abstraction layer between general-purpose applications and Raw image conversion intelligence, to permit seamless access to a diverse set of Raw image files. More specifically, in embodiments as illustrated, the client 102, an operating system operating on that client, or other platform or resource may introduce a Raw API layer 118 which communicates with applications and other resources, to facilitate a set of modular or extensible functions and services which those applications or other resources may invoke to access and manipulate Raw image files.

In embodiments of the invention in one regard, the Raw API layer 118 may reside at the operating system level, such as in the Microsoft Windows™ family of operating systems, and communicate with a hardware-specific Raw plugin layer 122. The hardware-specific Raw plugin layer 122 may be or include a set of specifications for Raw file, Raw data and other formats or structures. In embodiments, the hardware-specific Raw plugin layer 122 may for example be independently supplied by respective hardware manufacturers to ensure compatible access to the Raw image file 110 or other output generated by that manufacturer's cameras or other devices. The hardware-specific Raw plugin layer 122 may contain, for example, specifications for Raw file formats or containers, including formats or specifications or formats for image metadata, thumbnail representations of Raw images, embedded images or other objects, data or functions. The hardware-specific Raw plugin layer 122 may likewise contain specifications, code or handles to execute Raw image processing functions or data, such as parameterized inputs or full fidelity RGB image output. Other data, formats and functions are possible. In embodiments of the invention in one regard, the Raw API layer 118 may communicate with the hardware-specific Raw plugin layer 122 via a set of Raw codecs 120, or other encoder/decoder or other resources, channels or protocols.

According to embodiments of the invention in one regard, the Raw API layer 118 may expose a set of Raw image file handling, processing and other functions to a set of applications 114 via a Raw interface 116, to permit general-purpose image processing applications to invoke those routines or functions to access one or more Raw image file 110 from diverse sources, without prior knowledge of the content or format of those files. Those functions may, for example, be presented or made available to the user of client 102 or other device through activatable or selectable icons or dropdown menus from within image processing or other applications, or through operating system functions or resources such as file or directory browsing tools, printing tools or other utilities or resources. The functions and capabilities made available to the set of applications 114 as well as operating system and other resources may be or include, for instance, thumbnail generation, viewing or extraction functions, high-resolution viewing tools or functions, metadata extraction tools or resources, full Raw data decoding functions, or other functions, tools or resources.

For instance, Raw file conversion functions, such as to convert an original Raw image file 110 to a JPG, tagged image format file (TIFF), bitmap (BMP), graphic image format (GIF), portable network graphics (PNG) or other formats or files, may be provided or supported, to enable for example photo retouching or other manipulations of the Raw file data in one of those encoded formats. The Raw image file 110, any converted file or data, or other content may for example be stored to storage 106 by the set of applications 114, by the operating system or otherwise. The user of the set of applications 114 or of the operating system, however, need not be concerned about switching from one dedicated or special-purpose application or tool, depending on the manufacturer of a given imaging device 108. Rather, as long as the Raw file specifications and related data for a given imaging device 108 is registered to the hardware-specific Raw plugin layer 122, according to the invention any image processing or associated application may access and manipulate any Raw image file 110, transparently to the user. The Raw file specifications for the hardware-specific Raw plugin layer 122 may, for example, be loaded, registered or initiated in client 102 and/or its operating system by way of a loading from CD-ROM or other storage media, by download via the Internet or other network, or via other media or channels.

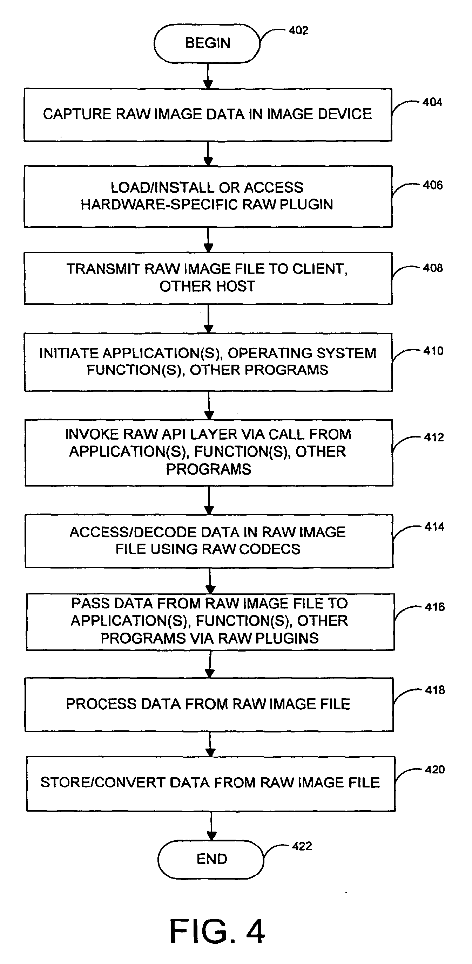

Fig. 4 illustrates overall Raw image processing, according to embodiments of the invention. In step 402, processing may begin. In step 404, Raw image data may be captured in an imaging device 108, such as a digital camera, digital video camera, scanner or other imaging or input device. In step 406, a hardware-specific Raw plugin layer 122 may be loaded, installed or accessed, for instance by installation or registration into an operating system or other platform, or accessing a plugin layer already installed or registered to an operating system or other platform, for instance on a client 102 or other machine. In step 408, the Raw image file 110 resulting from the image capture may be transmitted to a client 102 or other host, machine or destination. In step 410, one or more of a set of applications 114, operating system functions or other programs may be initiated, accessed or executed, for example initiating a general-purpose image editing suite, photo album, printing program, directory thumbnail service, or other application or function.

In step 412, raw API layer 118 may be invoked, for instance via a call from the set of applications 114, from operating system functions, or other programs or initiating objects. In step 414, the data in the Raw image file 110 may be accessed or decoded via the raw API layer 118, for instance using Raw codecs 120 or other decoding logic. For instance, the color or intensity values of the sensors in imaging device108 may be read out. In step 416, the data contained in the Raw image file 110 may be communicated or passed to the set of applications 114, to operating system functions or resources, or other programs via the Raw API layer 118, and raw plugins 116 as appropriate. In step 418, the Raw image data extracted from the Raw image file 110 may be processed or manipulated, for instance to generate a set of thumbnail representations of the contents of Raw image file 110, to preview a print job of the contents of Raw image file 110, or perform other tasks or functions. In step 420, the processed data may be stored or converted, for instance to generate a JPG, TIFF, BMP or other encoded image file. In step 422, processing may repeat, return to a prior processing point, jump to a further processing point or end.

The foregoing description of the invention is illustrative, and modifications in configuration and implementation will occur to persons skilled in the art. For instance, while the invention has generally been described in terms of the extraction and processing of a Raw image file 110 representing the output of a digital still camera, in embodiments the source of Raw image file 110 may be other equipment or sources, such as for example a scanning device, a digital video device, or other sensors or devices.

Similarly, while the invention has in embodiments been described as employing a hardware-specific Raw plugin layer 122 which is hosted by, or registered to, an operating system, in embodiments the hardware-specific Raw plugin layer 122 may be installed or embedded in other levels, layers or resources of client 102 or other host machine. Other hardware, software or other resources described as singular may in embodiments be distributed, and similarly in embodiments resources described as distributed may be combined. The scope of the invention is accordingly intended to be limited only by the following claims.

## Claims

1. A system for processing raw image data, comprising:
an input interface to receive raw image data generated by an imaging sensor; and
an abstraction layer, the abstraction layer communicating with a set of raw image plugins corresponding to a set of imaging sensors to access the raw image data.

2. A system according to claim 1, wherein the imaging sensor is contained within at least one of a digital camera, a digital video camera, a personal digital assistant, a cellular telephone and a scanner.

3. A system according to claim 1, wherein the raw image data comprises a set of pixel representations read out from the imaging sensor.

4. A system according to claim 1, wherein the abstraction layer comprises an application programming interface layer.

5. A system according to claim 4, wherein the application programming interface layer is embedded in an operating system or application.

6. A system according to claim 4, wherein the application programming interface layer exposes a set of raw image functions to at least one of a set of applications and a set of operating system resources.

7. A system according to claim 6, wherein the at least one of a set of applications and a set of operating system resources comprises at least a set of applications, and the set of applications comprises at least one of a general-purpose image editing program, an image acquisition program, a photo album program, a printing program, an image sharing program, a slideshow program, an image archiving program and an image viewing program.

8. A system according to claim 1, wherein the set of raw image plugins comprises at least one of a raw image file specification, raw image metadata specification, a raw image file hardware interface specification, and a raw image thumbnail representation specification.

9. A system according to claim 1, wherein the set of raw image plugins may be independently generated by manufacturers of devices containing corresponding imaging sensors.

10. A system according to claim 1, wherein the raw image data is converted to a non-raw encoded format.

11. A system according to claim 10, wherein the non-raw encoded format comprises at least one of a JPG format, a BMP format, a TIFF format, a GIF format and a PNG format.

12. A method for processing raw image data, comprising:
receiving raw image data generated by an imaging sensor;
communicating via an abstraction layer with a set of raw image plugins corresponding to a set of imaging sensors to identify a plugin associated with the imaging sensor; and
accessing the raw image data using the identified plugin.

13. A method according to claim 12, wherein the imaging sensor is contained within at least one of a digital camera, a digital video camera, a personal digital assistant, a cellular telephone and a scanner.

14. A method according to claim 12, wherein the raw image data comprises a set of pixel representations read out from the imaging sensor.

15. A method according to claim 12, wherein the abstraction layer comprises an application programming interface layer.

16. A method according to claim 15, wherein the application programming interface layer is embedded in an operating system or application.

17. A method according to claim 15, wherein the application programming interface layer exposes a set of raw image functions to at least one of a set of applications and a set of operating system resources.

18. A method according to claim 17, wherein the at least one of a set of applications and a set of operating system resources comprises at least a set of applications, and the set of applications comprises at least one of a general-purpose image editing program, an image acquisition program, a photo album program, a printing program, an image sharing program, a slideshow program, an image archiving program and an image viewing program.

19. A method according to claim 12, wherein the set of raw image plugins comprises at least one of a raw image file specification, raw image metadata specification, a raw image file hardware interface specification, and a raw image thumbnail representation specification.

20. A method according to claim 12, wherein the set of raw image plugins may be independently generated by manufacturers of devices containing corresponding imaging sensors.

21. A method according to claim 12, further comprising converting the raw image data to a non-raw encoded format.

22. A method according to claim 21, wherein the non-raw encoded format comprises at least one of a JPG format, a BMP format, a TIFF format, a GIF format and a PNG format.

23. An abstraction layer for providing access to raw image data, comprising:
a first interface to a set of raw image plugins corresponding to a set of imaging sensors;
a second interface to set of raw image processing functions; and
an application programming interface, the application programming interface communicating with the set of raw image plugins and the set of raw image functions to expose the raw image functions to a set of applications or operating system resources to access raw image data generated by an imaging sensor.

24. An abstraction layer according to claim 23, wherein the imaging sensor is contained within at least one of a digital camera, a digital video camera, a personal digital assistant, a cellular telephone and a scanner.

25. An abstraction layer according to claim 23, wherein the raw image data comprises a set of pixel representations read out from the imaging sensor.

26. An abstraction layer according to claim 23, wherein the abstraction layer is embedded in an operating system or application.

27. An abstraction layer according to claim 23, wherein the at least one of a set of applications and a set of operating system resources comprises at least a set of applications, and the set of applications comprises at least one of a general-purpose image editing program, an image acquisition program, a photo album program, a printing program, an image sharing program, a slideshow program, an image archiving program and an image viewing program.

28. An abstraction layer according to claim 23, wherein the set of raw image plugins comprises at least one of a raw image file specification, raw image metadata specification, a raw image file hardware interface specification, and a raw image thumbnail representation specification.

29. An abstraction layer according to claim 23, wherein the set of raw image plugins may be independently generated by manufacturers of devices containing corresponding imaging sensors.

30. A user interface, the user interface presenting a set of raw image functions to a user via a raw image abstraction layer, comprising:
a set of a raw image functions, the set of raw image functions being presented to the user via a set of selectable objects; and
a link to an application programming interface, the application programming interface communicating with a set of raw image plugins to selectively operate the set of raw image functions to access raw image data generated by an imaging sensor.

31. A user interface according to claim 30, wherein the set of raw image functions are presented to the user via at least one of a set of applications and a set of operating system resources.

32. A user interface according to claim 30, wherein the imaging sensor is contained within at least one of a digital camera, a digital video camera, a personal digital assistant, a cellular telephone and a scanner.

33. A user interface according to claim 30, wherein the raw image data comprises a set of pixel representations read out from the imaging sensor.

34. An user interface according to claim 31, wherein the at least one of a set of applications and a set of operating system resources comprises at least a set of applications, and the set of applications comprises at least one of a general-purpose image editing program, an image acquisition program, a photo album program, a printing program, an image sharing program, a slideshow program, an image archiving program and an image viewing program.

35. Raw image data, the raw image data being extracted by a method comprising:
receiving raw image data generated by an imaging sensor;
communicating via an abstraction layer with a set of raw image plugins corresponding to a set of imaging sensors to identify a plugin associated with the imaging sensor; and
accessing the raw image data using the identified plugin.

36. Raw image data according to claim 35, wherein the imaging sensor is contained within at least one of a digital camera, a digital video camera, a personal digital assistant, a cellular telephone and a scanner.

37. Raw image data according to claim 35, wherein the raw image data comprises a set of pixel representations read out from the imaging sensor.

38. Raw image data according to claim 35, wherein the abstraction layer comprises an application programming interface layer.

39. Raw image data according to claim 35, wherein the method further comprises converting the raw image data to a non-raw encoded format.

40. Raw image data according to claim 39, wherein the non-raw encoded format comprises at least one of a JPG format, a BMP format, a TIFF format, a GIF format and a PNG format.
